# EUROPÄISCHE PATENTSCHRIFT

(11) **EP 1 714 873 B1**
(45) Veröffentlichungstag und Bekanntmachung des Hinweises auf die Patenterteilung: **06.06.2007**
(21) Anmeldenummer: 05026544.6
(22) Anmeldetag: 06.12.2005
(51) Int. Cl.: B65B 5/10, B65B 35/06, B65G 47/14

(54) **Vorrichtung zum Orientieren und Weitertransport von Schüttgut**
Device for orientating and transporting bulk articles
Dispositif pour orienter et transporter des pièces en vrac

(30) Priorität: 21.04.2005 DE 102005018651
(43) Veröffentlichungstag der Anmeldung: 25.10.2006
(73) Patentinhaber: UHLMANN PAC-SYSTEME GmbH & Co. KG, 88471 Laupheim (DE)
(72) Erfinder: Gertitschke, Detlev, Dipl.-Ing., 88471 Laupheim (DE); Litke, Harald, 88480 Achstetten (DE)
(74) Vertreter: Hentrich, Swen

(56) Entgegenhaltungen:
- EP-A- 1 281 619
- EP-A- 1 391 386
- US-A- 2 828 888
- US-A- 6 102 188
- US-B1- 6 357 495

## Beschreibung

Die Erfindung betrifft eine Vorrichtung zum Orientieren und Weitertransport von Schüttgut aus einem in einem Sortierkasten angeordneten Trichter in eine dem Trichter in Transportrichtung nachgeordnete Zuführrinne.

Eine derartige Vorrichtung ist aus der EP 1 281 619 B1 bekannt, die sich gut bewährt hat und entsprechend weite Verbreitung gefunden hat. Jedoch sind durch eine Richtlinie der EU zur Lärmentwicklung insbesondere an Arbeitsplätze neue Rahmenbedingungen aufgetreten, die die Maschinenhersteller dazu zwingen, leisere Antriebe zu entwickeln, wobei die Lärmentwicklung wesentlich von dem Antiebsprinzip abhängt und der zu kapselnde Bauraum eine nicht unerhebliche Rolle spielt.

Der Erfindung liegt daher die Aufgabe zugrunde, eine Vorrichtung der eingangs genannten Art so auszubilden, dass diese mit einem einfachen Antriebssystem und kleiner Bauform eine möglichst hohe Leistungsfähigkeit erreicht.

Diese Aufgabe wird nach der Erfindung bei einer Vorrichtung der eingangs genannten Art dadurch gelöst, dass die Zuführrinnne an einer Öffnung im Boden des Sortierkastens angeschlossen ist und auf zwei gegenüberliegenden Seiten die Trichterwände aus zwei Lamellen mit geneigt zu der Öffnung verlaufenden Lamellenschultern gebildet sind, denen ein Lamellenantrieb zu Verstellung der Lamellen relativ zu der Öffnung zugeordnet ist.

Diese Vorrichtung zeichnet sich dadurch aus, dass die erwünschte Orientierung und der Weitertransport des Schüttgutes in einfacher Weise durch die beiden sich gegenüberliegenden Lamellenschultern erreicht wird, die die Kanalisierung des Schüttgutes zu der Zuführrinne bewirken unter Ausnutzung der von den Lamellenschultern vermittelten Hangabtriebskraft. Eine Klumpenbildung des Schüttgutes wird dabei durch die Verstellung der Lamellen mittels des Lamellenantriebs vermieden, bzw. eine kurzfristig sich bildende Keilwirkung im Schüttgut wird wieder aufgelöst, wenn die Lamellen erneut verstellt werden, also die relative Lage der beiden sich gegenüberliegenden Lamellenschulter sich verändert. Der Lamellenantrieb kann sehr einfach realisiert werden ohne das Erfordernis einer aufwendigen und damit kostenträchtigen Lagerung.

Weiterhin ist im Rahmen der Erfindung vorgesehen, dass der Trichter in Umfangsrichtung durch zwei die Lamellen ergänzende Trennwände geschlossen ist. Diese Tennwände müssen nicht zur Orientierung des Schüttgutes beitragen, was im wesentlichen durch die Lamellenschultern erfolgt, und lediglich verhindern, dass das Schüttgut unter der Wirkung der Schwerkraft seitlich von den Lamellenschultern herabfließen kann.

Bei einer derartigen Gestaltung besteht auch die Möglichkeit, dass der Trichter mehrfach vorgesehen ist, in serieller Anordnung innerhalb des Sortierkastens, so dass in einfacher Weise eine erhebliche Leistungssteigerung der Vorrichtung erreicht wird.

Eine ganz besonders bevorzugte Ausführungsform der Erfindung ist dadurch gekennzeichnet, dass jeder Lamelle ein eigener Lamellenantrieb zugeordnet ist zur Bewegungserzeugung unabhängig von der komplementären Lamelle. Mit dieser Gestaltung ist eine hohe Flexibilität bei dem Einsatz der Vorrichtung erreicht, bei der je nach geeigneter Ansteuerung des Lamellenantriebes sowohl eine gleichsinnige Bewegung der sich gegenüberstehenden Lamellen erzeugt werden kann, als auch eine gegensinnige, wobei sogar die Möglichkeit besteht, zur verstärkten Durchrüttelung des Schüttgutes das Bewegungsmuster periodisch oder stochastisch umzukehren.

Vorteilhaft ist es weiterhin, wenn mindestens einer der Lamellen ein verstellbarer Anschlag zugeordnet ist, da so die Amplitude der Bewegung der Lamellen verändert und beispielsweise an die Größe der Produkte des Schüttgutes angepasst werden kann. Dieser verstellbare Anschlag läßt sich in einfacher Weise dadurch realisieren, dass der Anschlag durch eine im Sortierkasten gelagerte Stellschraube gebildet ist.

Im Rahmen der Erfindung ist weiterhin vorgesehen, dass der Lamellenantrieb als druckmittelbetätigter Antrieb gestaltet ist, insbesondere dass der Lamellenantrieb Pneumatikantrieb ausgeführt ist. Die Verwendung dieser als Antriebsart bietet sich insbesondere im Hinblick auf eine möglichst geräuscharme Betriebsweise an, da mit wenig bewegten Teilen ohne die mit Motoren verbundene Geräuschentwicklung die Verstellung der Lamellen erzeugt werden kann. Dabei ist es wünschenswert, dass der Pneumatikzylinder des Pneumatikantriebs als Membranzylinder ausgeführt ist, weil das zu einer geräuscharmen Betriebsweise mit wenig Verschleiß führt.

Da die erfindungsgemäße Vorrichtung sich insbesondere für den Einsatz im pharmazeutischen Bereich oder bei der Verarbeitung von Lebensmitteln eignet, ist die Auswahl so getoffen, dass die Membran des Membranzylinders aus einem lebensmittelrechtlich zugelassenen Werkstoff besteht, um so eine pharmazeutisch oder lebensmittelrechtlich bedenkliche Kontamination des Schüttgutes mit Sicherheit auszuschließen.

Eine weitere bevorzugte Ausführungsform der Erfindung ist dadurch gekennzeichnet, dass dem Lamellenantrieb eine Antiebssteuerung mit einem Frequenzgeber zur variablen Festlegung einer Frequenz der zyklischen Bewegung der Lamelle zugeordnet ist. Dies führt zu einer sehr großen Variablität hinsichtlich des den Lamellen durch den Lamellenantrieb aufgeprägten Bewegungsmusters, das entsprechend der Form, Größe und Oberflächengestaltung der Einzelteile des Schüttgutes optimiert ausgewählt werden kann. Eine Anpassung an die Größe der das Schuttgut bildende Produkte dient auch, dass der Hub der Lamelle einstellbar ist.

Im folgenden wird die Erfindung an einem in der Zeichnung dargestellten Ausführungsbeispiel näher erläutert; es zeigen:

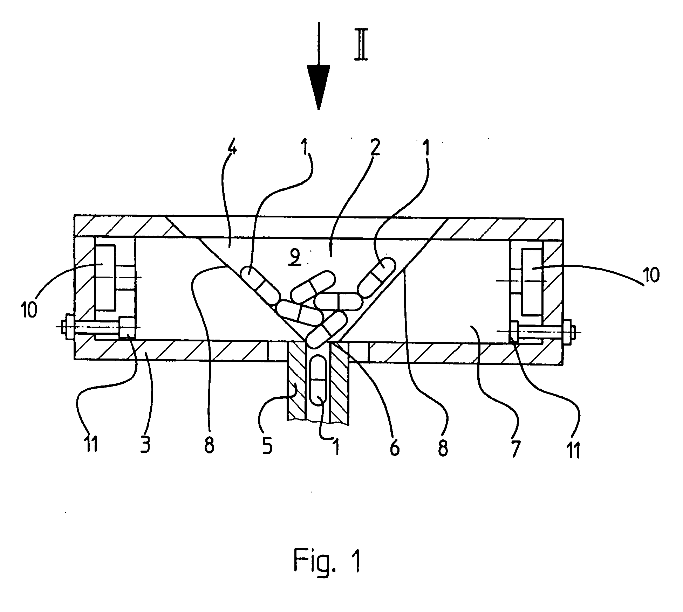

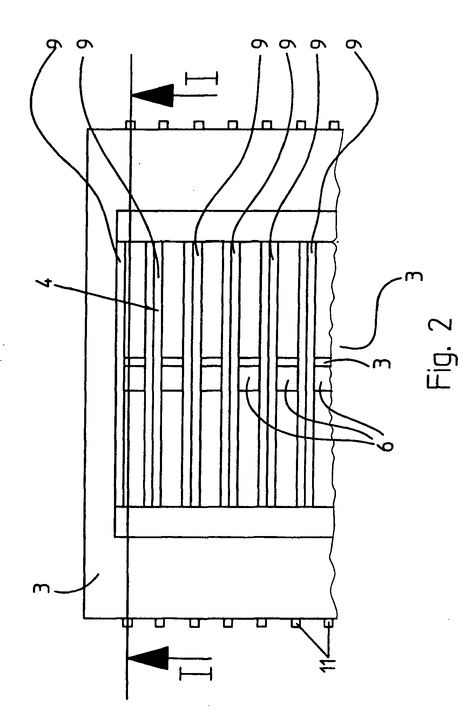

- Fig. 1: einen Längsschnitt durch eine erfindungsgemäße Vorrichtung entsprechend dem Schnitt I - I aus Fig. 2, und
- Fig. 2: eine Sicht aus Richtung des Pfeiles II aus Fig. 1.

In der Zeichnung ist eine Vorrichtung gezeigt, die dazu dient, aus einzelnen, insbesondere kleinteiligen Produkten 1 gebildetes Schüttgut 2 gezielt zu orientieren und weiter zu transportieren, um beispielsweise die einzelnen Produkte 1 des Schüttgutes 2 gezielt in, in der Zeichnung nicht dargestellte, Produktaufnahmen einer Formfolie oder dergl. ablegen zu können. Dazu umfasst die Vorrichtung einen in einem Sortierkasten 3 angeordneten Trichter 4, wobei zur Leistungssteigerung dieser Vorrichtung der Trichter 4 mehrfach vorgesehen ist in einer seriellen Anordnung innerhalb des Sortierkastens 3, wobei jeder Trichter 4 dieser seriellen Anordnung prinzipiell den gleichen, nachfolgend näher zu beschreibenden Aufbau aufweist. Dem bzw. jedem Trichter 4 ist in Transportrichtung eine Zuführrinne 5 nachgeordnet, wobei die Zuführrinne 5 an eine Öffnung 6 im Boden des Sortierkastens 3 angeschlossen ist. Auf zwei gegenüberliegenden Seiten des Trichters 4 sind die Trichterwände aus zwei Lamellen 7 mit geneigt zu der Öffnung 6 verlaufenden Lamellenschultern 8 gebildet, während der Trichter 4 in Umfangsrichtung durch zwei die Lamellen 7 ergänzende Trennwände 9 geschlossen ist. Den Lamellen 7 ist ein Lamellenantrieb 10 zur Verstellung der Lamellen 7 relativ zu der Öffnung 6 zugeordnet, wobei jede Lamelle 7 einen eigenen Lamellenantrieb 10 aufweist.

Bei dem in der Zeichnung dargstellten Ausführungsbeispiel ist jeder der Lamellen 7 ein verstellbarer, durch eine im Sortierkasten 3 gelagerte Stellschraube gebildeter Anschlag 11 zugeordnet, so dass der Hub der Lamelle 7 zwischen der zur Öffnung 6 vorgestellten und der von der Öffnung 6 zurückgezogenen Richtung variiert und definiert begrenzt werden kann.

Bei dem in der Zeichnung dargestellten Ausführungsbeispiel ist für den Lamellenantrieb 10 ein durckmittelbetätigter Antrieb vorgesehen und zwar ein Pneumatikantrieb, bei dem der Pneumatikzylinder als Membranzylinder ausgeführt ist. Die Membran des Membranzylinders besteht aus einem lebensmittelrechtlich zugelassen Werkstoff. Weiterhin ist zu beachten, dass dem Lamellenantrieb eine Antriebssteuerung mit einem Frequenzgeber zur variablen Festlegung einer Frequenz der zyklischen Bewegung der Lamelle 7 zugeordnet ist.

Nachfolgend wird kurz die Betriebsweise der vorstehend beschriebenen Vorrichtung geschildert. Zu Beginn wird das aus einzelnen Produkten 1 gebildete Schüttgut 2 in den Trichter 4 eingefüllt, wobei das Schüttgut 2 auf den beiden sich gegenüberliegenden Lamellenschultern 8 der beiden Lamellen 7 zu liegen kommt. In Abhängigkeit der Größe, der Maße, der Form und/oder der Oberflächenbeschaffenheit der einzelnen Produkte 1 des Schüttgutes 2 wird mittels des Lamellenantiebes 10 den beiden Lamellen 7 eine Bewegung aufgeprägt, die in erster Linie eine translatorische oszillierende Bewegung ist. Dabei bestehen die beiden Möglichkeiten, die beiden Lamellen 7 gleichsinnig oder gegensinnig zu bewegen, wobei bei der gleichsinnigen Bewegung der beiden Lamellen 7 im wesentlichen ein Konus konstanter Gestalt oberhalb der Öffnung verschoben wird, während bei der gegensinnigen Bewegung die durch die Lamellenschultern 8 definierte Größe des Trichters 4 permanent verändert wird. Das Bewegungsmuster der Lamellen 7 kann über die Antriebssteuerung auch verändert werden und insbesondere zur Vermeidung oder Auflösung einer Klumpenbildung in dem Schüttgut 2 ein anderer Hub sowie eine andere Frequenz gewählt werden, wobei zu beachten ist, das prinzipiell auch eine asynchrone Bewegung der beiden sich gegenüberliegenden Lamellen 7 mit dieser Vorrichtung erzeugt werden kann.

## Patentansprüche

1. Vorrichtung zum Orientieren und Weitertransport Von Schüttgut (2) aus einem in einem Sortierkasten (3) angeordneten Trichter (4) in eine dem Trichter (4) in Transportrichtung nachgeordnete Zuführrinne (5), **dadurch gekennzeichnet, daß** die Zuführrinne (5) an eine Öffnung (6) im Boden des Sortierkastens (3) angeschlossen ist und auf zwei gegenüberliegenden Seiten die Trichterwände aus zwei Lamellen (7) mit geneigt zu der Öffnung (6) verlaufenden Lamellenschultern (8) gebildet sind, denen ein Lamellenantrieb (10) zur Verstellung der Lamellen (7) relativ zu der Öffnung (6) zugeordnet ist.

2. Vorrichtung nach Anspruch 1, **dadurch gekennzeichnet, daß** der Trichter (4) in Umfangsrichtung durch zwei die Lamellen (7) ergänzende Trennwände (9) geschlossen ist.

3. Vorrichtung nach Anspruch 2, **dadurch gekennzeichnet, daß** der Trichter (4) mehrfach vorgesehen ist in serieller Anordnung innerhalb des Sortierkastens (3).

4. Vorrichtung nach einem der Ansprüche 1 bis 3, **dadurch gekennzeichnet, daß** jeder Lamelle (7) ein eigener Lamellenantrieb (10) zugeordnet ist zur Bewegungserzeugung unabhängig von der komplementären Lamelle (7).

5. Vorrichtung nach einem der Ansprüche 1 bis 4, **dadurch gekennzeichnet, daß** mindestens einer der Lamellen (7) ein verstellbarer Anschlag (11) zugeordnet ist.

6. Vorrichtung nach Anspruch 5, **dadurch gekennzeichnet, daß** der Anschlag (11) durch eine im Sortierkasten (3) gelagerte Stellschraube gebildet ist.

7. Vorrichtung nach einem der Ansprüche 1 bis 6, **dadurch gekennzeichnet, daß** der Lamellenantrieb (10) als druckmittelbetätigter Antrieb gestaltet ist.

8. Vorrichtung nach Anspruch 7, **dadurch gekennzeichnet, daß** der Lamellenantrieb (10) als Pneumatikantrieb ausgeführt ist.

9. Vorrichtung nach Anspruch 8, **dadurch gekennzeichnet, daß** der Pneumatikzylinder des Pneumatikantriebs als Membranzylinder ausgeführt ist.

10. Vorrichtung nach Anspruch 9, **dadurch gekennzeichnet, daß** die Membran des Membranzylinders aus einem lebensmittelrechtlich zugelassenen Werkstoff besteht.

11. Vorrichtung nach einem der Ansprüche 1 bis 10, **dadurch gekennzeichnet, daß** dem Lamellenantrieb (10) eine Antriebssteuerung mit einem Frequenzgeber zur variablen Festlegung einer Frequenz der zyklischen Bewegung der Lamelle (7) zugeordnet ist.

12. Vorrichtung nach einem der Ansprüche 1 bis 11, **dadurch gekennzeichnet, daß** der Hub der Lamelle (7) einstellbar ist.

## Claims

1. Device for the directing and onward conveyance of bulk material (2) from a hopper (4) arranged in a sorting box (3) into a feed channel (5) lying downstream in transport direction from the hopper (4), **characterized in that** the feed channel (5) is attached to an opening (6) in the base of the sorting box (3) and on two opposite sides the hopper walls are formed from two plates (7) with plate shoulders (8), running at an angle to the opening (6), to which a plate drive (10) is assigned for positioning the plates (7) relative to the opening (6).

2. Device according to claim 1, **characterized in that** the hopper (4) is closed in circumferential direction by two partition walls (9) supplementing the plates (7).

3. Device according to claim 2, **characterized in that** the hopper (4) is provided more than once in serial arrangement inside the sorting box.

4. Device according to one of claims 1 to 3, **characterized in that** each plate (7) is assigned its own plate drive (10) to generate movement independently of the complementary plate (7).

5. Device according to one of claims 1 to 4, **characterized in that** an adjustable stop (11) is assigned to at least one of the plates (7).

6. Device according to claim 5, **characterized in that** the stop (11) is formed by a set screw housed in the sorting box (3).

7. Device according to one of claims 1 to 6, **characterized in that** the plate drive (10) is configured as a pressure medium-actuated drive.

8. Device according to claim 7, **characterized in that** the plate drive (10) is designed as a pneumatic drive.

9. Device according to claim 8, **characterized in that** the pneumatic cylinder of the pneumatic drive is designed as a diaphragm cylinder.

10. Device according to claim 9, **characterized in that** the diaphragm of the diaphragm cylinder consists of a material approved under food law.

11. Device according to one of claims 1 to 10, **characterized in that** a drive control with a frequency generator for the variable fixing of a frequency of the cyclic movement of the plate (7) is assigned to the plate drive (10).

12. Device according to one of claims 1 to 11, **characterized in that** the travel of the plate (7) is adjustable.

## Revendications

1. Dispositif pour orienter et transporter des produits en vrac (2) à partir d'une trémie (4), placée dans un caisson de triage (3), vers une goulotte d'alimentation (5) installée à la suite de la trémie (4), dans la direction de transport, **caractérisé en ce que** la goulotte d'alimentation (5) est raccordée à une ouverture (6) prévue dans le fond du caisson de triage (3) et, sur deux côtés opposés, les parois de la trémie sont constituées de deux lames (7) qui sont dotées d'épaulements de lame (8) inclinés en direction de l'ouverture (6) et auxquelles est associé un moyen d'entraînement de lames (10) destiné à déplacer les lames (7) par rapport à l'ouverture (6).

2. Dispositif selon la revendication 1, **caractérisé en ce que** la trémie (4) est fermée dans la direction périphérique par deux cloisons (9) complétant les lames (7).

3. Dispositif selon la revendication 2, **caractérisé en ce que** la trémie (4) est prévue plusieurs fois dans un agencement en série à l'intérieur du caisson de triage (3).

4. Dispositif selon une des revendications 1 à 3, **caractérisé en ce qu'**il est associé à chaque lame (7), un moyen d'entraînement de lame (10) propre, destiné à générer un mouvement, indépendamment de la lame (7) complémentaire.

5. Dispositif selon une des revendications 1 à 4, **caractérisé en ce qu'**une butée (11) réglable est associée à au moins une des lames (7).

6. Dispositif selon la revendication 5, **caractérisé en ce que** la butée (11) est constituée d'une vis de réglage montée dans le caisson de triage (3).

7. Dispositif selon une des revendications 1 à 6, **caractérisé en ce que** le moyen d'entraînement de lame (10) est réalisé sous forme d'entraînement actionné par un fluide sous pression.

8. Dispositif selon la revendication 7, **caractérisé en ce que** le moyen d'entraînement de lame (10) est réalisé sous forme d'entraînement pneumatique.

9. Dispositif selon la revendication 8, **caractérisé en ce que** le vérin pneumatique du moyen d'entraînement pneumatique est réalisé sous forme de vérin à membrane.

10. Dispositif selon la revendication 9, **caractérisé en ce que** la membrane du vérin à membrane est formée d'un matériau autorisé par la législation alimentaire.

11. Dispositif selon une des revendications 1 à 10, **caractérisé en ce qu'**il est associé au moyen d'entraînement de lame (10), une commande d'entraînement dotée d'un générateur de fréquence pour effectuer la fixation variable d'une fréquence du mouvement cyclique de la lame (7).

12. Dispositif selon une des revendications 1 à 11, **caractérisé en ce que** la course de la lame (7) est réglable.
